# EUROPÄISCHE PATENTSCHRIFT

(11) **EP 3 585 561 B1**
(45) Veröffentlichungstag und Bekanntmachung des Hinweises auf die Patenterteilung: **19.07.2023**
(21) Anmeldenummer: 18706688.1
(22) Anmeldetag: 15.02.2018
(51) Int. Cl.: B24B 13/005, B29D 11/00

(54) **VORRICHTUNG UND VERFAHREN ZUM ABBLOCKEN EINER LINSE**
DEVICE AND METHOD FOR DEBLOCKING A LENS
DISPOSITIF ET PROCÉDÉ DE DÉBLOCAGE D'UNE LENTILLE

(30) Priorität: 22.02.2017 DE 102017001679
(43) Veröffentlichungstag der Anmeldung: 01.01.2020
(73) Patentinhaber: Schneider GmbH & Co. KG, 35112 Fronhausen (DE)
(72) Erfinder: SCHNEIDER, Gunter, 35037 Marburg (DE); HOFMANN, Klaus, 61273 Wehrheim (DE); SIMMER, Thomas, 35216 Biedenkopf-Breidenstein (DE); KRÄMER, Klaus, 35232 Dautphetal-Friedensdorf (DE)
(74) Vertreter: Von Rohr Patentanwälte Partnerschaft mbB
(86) Internationale Anmeldenummer: PCT/EP2018/053743
(87) Internationale Veröffentlichungsnummer: WO 2018/153764

(56) Entgegenhaltungen:
- EP-B1- 2 042 265
- WO-A1-2015/101652
- DE-A1- 10 353 553
- DE-A1-102009 048 590
- US-A1- 2010 170 635
- US-A1- 2013 061 462

## Beschreibung

Die vorliegende Erfindung betrifft eine Vorrichtung zum Abblocken einer Linse gemäß Anspruch 1 1 und ein Verfahren zum Abblocken einer Linse gemäß Anspruch 11.

Linsen, insbesondere Brillengläser, werden zur Bearbeitung üblicherweise an einem sogenannten Blockstück als Halter mittels eines sogenannten Blockmaterials geblockt, also befestigt bzw. gehalten. Das Blockstück dient dazu, die daran befestigte - also geblockte - Linse sehr präzise und definiert für einige oder mehrere Bearbeitung(en) zu halten. Danach wird die Linse wieder abgeblockt, also von dem Blockstück gelöst. Im Hinblick auf eine kostengünstige Linsenfertigung soll dies auf einfache Weise effizient und schnell erfolgen.

Als Blockmaterial können Legierungen mit niedriger Schmelztemperatur und Thermoplaste, also thermoplastische Materialien, oder nicht-thermoplastische Materialien, insbesondere aushärtende Klebstoffe, eingesetzt werden. Je nach eingesetztem Blockmaterial ergeben sich unterschiedliche Anforderungen bzw. Verfahrensabläufe beim Abblocken, also Lösen der Linse von dem Blockstück bzw. Blockmaterial.

Die Linse kann optional auf ihrer dem Blockstück bzw. Blockmaterial zugewandten Blockseite (Flachseite) mit einer insbesondere aufgeklebten Schutzfolie versehen sein. Beim Abblocken bzw. nach dem Abblocken wird dann vorzugsweise auch die Schutzfolie insbesondere für weitere Bearbeitungen bzw. zum späteren Beschichten der Linse entfernt. Dies kann erfindungsgemäß auch beim Abblocken bzw. in der Vorrichtung zum Abblocken erfolgen.

Die DE 103 53 553 A1 offenbart eine Anlage und ein Verfahren zum Abblocken von Brillengläsern, also Linsen für Brillen, wobei die Linsen mittels einer bandartigen Fördereinrichtung zum Abblocken durch ein temperiertes Wasserbad und dann nach dem Trennen vom Blockstück kontinuierlich nacheinander durch mehrere Reinigungseinrichtungen geführt bzw. gefördert werden. Diese Anlage baut relativ groß und gestattet keinen optimalen Durchsatz.

Die EP 2 042 265 B1 offenbart ein Verfahren zum Abblocken und Entfernen der Schutzfolie. Das Blockmaterial wird durch Einwirkung eines erwärmten Fluids auf die Linse und das Blockstück vorgewärmt. Insbesondere wird die geblockte Linse hierzu in die erwärmte Flüssigkeit getaucht. Nach dem Vorwärmen wird ein lateraler Hochdruckstrahl des vorgenannten Fluids auf das Blockstück an der Grenze zum Blockmaterial gerichtet, um das Blockstück zu lösen. Schließlich wird ein Strahl einer warmen Flüssigkeit mit variierender Neigung auf die Kontur der Linse bzw. den Rand der Schutzfolie gerichtet, wobei die Linse hierbei rotiert, um die Schutzfolie abzulösen. Schließlich wird die Linse getrocknet und an ein Transportbehältnis übergeben.

Die WO 2008/116946 A1 offenbart eine Vorrichtung zum Abblocken von Linsen mit federvorgespannten Armen zum Halten von Blockstücken der Linsen während des Abblockens.

Die DE 10 2009 048 590 A1 offenbart eine Vorrichtung zum Abblocken von Brillengläsern. Ein abzublockendes Brillenglas wird einerseits am Blockstück und andererseits an seiner freien Flachseite gehalten, wobei das aufgeblockte Brillenglas gedreht wird und eine Düse einen Hochdruckstrahl auf die Grenzfläche zwischen Blockstück und Brillenglas richtet. Die Düse ist entlang der Drehachse lagegeregelt verschiebbar, so dass der Hochdruckstrahl auf eine vorbestimmte Auftreffstelle zwischen Brillenglas und Blockstück gerichtet wird. Weiter ist die Düse auch radial verstellbar und in ihrer Neigung zur Drehachse einstellbar. Die Vorrichtung erfordert ein winkeldefiniertes Einspannen des Blockstücks und Erfassen der Drehlage des Brillenglases, um den Hochdruckstrahl genau auf die Grenzfläche zwischen Blockstück und Brillenglas richten zu können, so dass aushärtender Klebstoff als Blockmaterial gelöst werden kann. An dem Brillenglas anhaftendes Blockmaterial kann nach dem Abblocken mittels eines weiteren, rotierenden Hochdruckstrahls über eine eigens hierfür vorgesehene Düse entfernt werden.

Der vorliegenden Erfindung liegt die Aufgabe zugrunde, eine Vorrichtung und ein Verfahren zum Abblocken einer Linse anzugeben, wobei eine einfache und kompakte Bauweise und/oder ein kostengünstiges und schnelles Abblocken mit hohem Durchsatz ermöglicht wird bzw. werden.

Die obige Aufgabe wird durch eine Vorrichtung gemäß Anspruch 1 oder durch ein Verfahren gemäß Anspruch 11 gelöst. Vorteilhafte Weiterbildungen sind Gegenstand der Unteransprüche.

Das Abblocken, also Lösen, einer Linse von einem Blockstück, an dem die Linse mittels eines Blockmaterials geblockt - also temporär befestigt - ist, erfolgt besonders bevorzugt mittels eines Fluidstrahls, wobei die geblockte Linse insbesondere gedreht wird.

Als Blockmaterial wird besonders bevorzugt ein Thermoplast oder sonstiges Material eingesetzt.

Die Linse ist optional auf ihrer Blockseite mit einer Schutzschicht bzw. Schutzfolie versehen.

Gemäß der vorliegenden Erfindung ist die Vorrichtung vorzugsweise zur simultanen Entfernung einerseits von Blockmaterial von einem abgeblockten Blockstück mittels eines Fluidstrahls und andererseits der Schutzschicht und/oder von Blockmaterial von der abgeblockten Linse mittels eines anderen Fluidstrahls ausgebildet. Verfahrensmäßig werden nach dem Abblocken vorzugsweise das Blockmaterial von dem abgeblockten Blockstück und die Schutzschicht oder das Blockmaterial von der abgeblockten Linse simultan mittels separater Fluidstrahlen insbesondere in einem gemeinsamen Arbeitsraum entfernt. Dies erfolgt insbesondere auch in dem Arbeitsraum, in dem das Abblocken erfolgt. So werden eine einfache und kompakte Bauweise sowie ein kostengünstiges und schnelles Abblocken mit hohem Durchsatz ermöglicht.

Gemäß einem weiteren Aspekt weist die Vorrichtung vorzugsweise zwei Düseneinrichtungen auf, die zur Erzeugung von entgegengesetzt oder unterschiedlich zu einer Radialebene einer Drehachse der Linse bzw. des Blockstücks geneigten Fluidstrahlen ausgebildet bzw. angeordnet sind und/oder die beide - insbesondere längs einer Drehachse der Linse bzw. des Blockstücks - oszillierend bewegbar sind. Dies ermöglicht einen einfachen Aufbau und insbesondere ein kostengünstiges und schnelles, also effizientes Abblocken mit hohem Durchsatz.

Gemäß einem weiteren Aspekt weist die Vorrichtung vorzugsweise drei Düseneinrichtungen zur Erzeugung eines ersten, eines zweiten und eines zusätzlichen Fluidstrahls im Arbeitsraum auf, wobei der erste Fluidstrahl zum Lösen der Linse zusammen mit der Schutzschicht, sofern vorhanden, vom Blockmaterial bzw. Blockstück, der zweite Fluidstrahl zum Entfernen von Blockmaterial von dem Blockstück und der zusätzliche Fluidstrahl zum Entfernen der Schutzschicht, sofern vorhanden, oder von Blockmaterial von der abgeblockten Linse einsetzbar bzw. vorgesehen ist. Dies ermöglicht einen einfachen Aufbau und insbesondere ein kostengünstiges und schnelles Abblocken mit hohem Durchsatz.

Gemäß einem weiteren realisierbaren Aspekt der weisen sowohl eine Halteeinrichtung für das Blockstück als auch eine Halteeinrichtung für die Linse jeweils einen Drehantrieb auf, so dass insbesondere sowohl zum Abblocken als auch nach dem Abblocken das Blockstück und die Linse motorisch drehbar sind, wodurch insbesondere das Entfernen von Blockmaterial und der optionalen Schutzschicht besonders effizient und schnell sowie auf einfache und zuverlässige Weise ermöglicht wird.

Gemäß einem weiteren realisierbaren Aspekt weist die Vorrichtung vorzugsweise eine Manipulationseinrichtung mit einem bewegbaren Träger auf, wobei der Träger mehrere unabhängig bewegbare bzw. betätigbare Greifer für die Linse und das Blockstück aufweist. Dies gestattet insbesondere eine einfache Realisierung und/oder einen optimierten Verfahrensablauf bei der Beschickung mit abzublockenden Linsen.

Besonders bevorzugt ist der Träger nur in einer Richtung bzw. linear oder nur in einer Ebene bewegbar. Dies gestattet einen besonders einfachen und kostengünstigen Aufbau.

Vorzugsweise sind die Greifer - vorzugsweise ausschließlich - quer oder senkrecht zu der Bewegungsrichtung bzw. -ebene des Trägers bewegbar, verfahrbar oder teleskopierbar.

Gemäß einem weiteren Aspekt werden vorzugsweise die geblockte Linse, die abgeblockte Linse und das abgeblockte Blockstück von unabhängig arbeitenden bzw. separaten und/oder unabhängig teleskopierbaren Greifern gegriffen und/oder werden die abgeblockte Linse und das abgeblockte Blockstück simultan gegriffen. Dies ermöglicht einen optimierten Verfahrensablauf und insbesondere eine optimierte Beschickung. Wenn nämlich eine abgeblockte Linse und ein abgeblocktes Blockstück gegriffen worden sind, kann direkt über einen weiteren separaten Greifer eine geblockte Linse mit Blockstück wieder zugefördert, insbesondere ein Arbeitsraum bzw. eine diesbezügliche Halteeinrichtung damit beschickt werden.

Die Greifer arbeiten vorzugsweise pneumatisch und greifen bzw. halten die Linse und/oder das Blockstück besonders bevorzugt durch Unterdruck bzw. mittels entsprechender Sauger. Dies gestattet eine einfache und kostengünstige Realisierung und hohe Flexibilität auch bei unterschiedlichen großen Linsen und/oder Blockstücken.

Gemäß einem weiteren Aspekt wird die Linse nach dem Abblocken vorzugsweise durch Öffnen des Arbeitsraums gewendet und/oder von dem abgeblockten Blockstück weggeschwenkt. Dies gestattet einen einfachen und kostengünstigen Aufbau sowie einen optimierten Bewegungs- bzw. Verfahrensablauf.

Gemäß einem weiteren Aspekt wird die Linse vorzugsweise mittels der die Linse zum Abblocken haltenden Halteeinrichtung gewendet bzw. um mehr als 90°, vorzugsweise im Wesentlichen 180° geschwenkt, um einen einfachen Bewegungs- bzw. Verfahrensablauf zu ermöglichen, insbesondere eine zusätzlich schwenkbare Manipulationseinrichtung zu vermeiden. Dies ist einem einfachen und kostengünstigen Aufbau zuträglich.

Gemäß einem weiteren Aspekt wird die abgeblockte Linse vorzugsweise gewendet und insbesondere mit der Blockseite nach oben in einen Transportträger abgelegt. Dies ist einem besonders bevorzugt schonenden Weitertransport der Linse zuträglich, da die dem Blockstück abgewandte Flachseite der Linse üblicherweise konkav ausgebildet ist und so die Linse idealerweise nur im Bereich ihres Randes in dem Transportträger aufliegt.

Gemäß einem weiteren Aspekt weist die Vorrichtung vorzugsweise eine nur lineare Bewegungen ausführende Manipulationseinrichtung auf, um die geblockte Linse von einem Transportträger aufzunehmen und den Arbeitsraum damit zu beschicken sowie um die nach dem Abblocken gewendete Linse aufzunehmen und wieder an einen Transportträger abzugeben. Dies ermöglicht einen besonders einfachen und kostengünstigen Aufbau und einen optimierten Bewegungsablauf.

Generell ist anzumerken, dass die Drehachse zum Drehen der Linse beim Abblocken vorzugsweise zumindest im Wesentlichen vertikal und/oder zumindest im Wesentlichen parallel zu der Zentralachse des Blockstücks bei Zuförderung der geblockten Linsen zu der Vorrichtung und/oder parallel zu der optischen Achse der abgeblockten Linse bei der Wegförderung von der Vorrichtung verläuft. Dies ist wiederum einem einfachen Aufbau zuträglich. Insbesondere ist kein (gesteuertes) Schwenken oder Kippen des Blockstücks erforderlich und/oder kann eine nur lineare Bewegung ausführende Manipulationseinrichtung eingesetzt werden.

Vorzugsweise ist die Vorrichtung bzw. Manipulationseinrichtung, zumindest deren Träger, CNC-gesteuert und/oder zur insbesondere lagegeregelten Positionierung der Linse oder des Blockstücks mit der Linse ausgebildet. Dies ist einer optimierten bzw. definierten Manipulation zuträglich.

Gemäß einem weiteren Aspekt ist vorzugsweise vorgesehen, dass die abgeblockte Linse (2) - hier vorzugsweise von der Abblockvorrichtung (1) oder deren Manipuliereinrichtung (7) - in einen zusätzlichen Transportträger (18) abgelegt und in diesem insbesondere für eine weitere Bearbeitung unabhängig von einem ursprünglich die geblockte Linse (2) verwendeten Transportträger (17) weitergefördert wird. Dies gestaltet einen optimierten Ablauf bzw. eine bessere Manipulation der abgeblockten Linse bei der weiteren Bearbeitung, wie einem Reinigen, Beschichten, einer Randbearbeitung, etc.

Gemäß einem weiteren Aspekt werden die abgeblockten Blockstücke vorzugsweise gereinigt, geprüft - insbesondere auf Beschädigungen oder Verschmutzungen oder ein Anhaften von Blockmaterial -, sortiert - insbesondere nach Form und/oder Größe - und/oder zwischengespeichert. Dies erfolgt besonders bevorzugt in der Abblockvorrichtung. So wird ein einfacher und optimierter Verfahrensablauf bei geringem Aufwand ermöglicht.

Besonders bevorzugt ist die vorschlagsgemäße Abblockvorrichtung derart ausgebildet, dass die abgeblockten Blockstücke vollautomatisiert oder teilautomatisiert weiter- oder weggefördert werden können.

Ein anderer Aspekt liegt darin, dass das Blockmaterial vorzugsweise vorgewärmt wird bzw. die Vorrichtung vorzugsweise eine Wärmeeinrichtung zur Erwärmung oder Vorwärmung des Blockmaterials mittels Strahlung aufweist bzw. das Blockmaterial mittels Strahlung, besonders bevorzugt Infrarot- oder Mikrowellenstrahlung, erwärmt oder vorgewärmt wird. Dies ermöglicht eine einfache oder kostengünstige Realisierung und/oder einen einfachen Verfahrensablauf.

Insbesondere erfolgt die Erwärmung oder Vorwärmung des Blockmaterials im Bereich einer Zuförderung, insbesondere einem Förderband, und/oder vor einer Entnahme einer abzublockenden Linse aus einem Transportträger. Dies ist einem besonders kompakten Aufbau und/oder einer Minimierung der Handhabungsschritte zuträglich.

Weitere Aspekte, Merkmale, Vorteile und Eigenschaften der vorliegenden Erfindung ergeben sich aus den Ansprüchen und der nachfolgenden Beschreibung einer bevorzugten Ausführungsform anhand der Zeichnung. Es zeigt:
- Fig. 1: eine schematische perspektivische Ansicht einer vorschlagsgemäßen Vorrichtung zum Abblocken einer Linse;
- Fig. 2: einen schematischen Schnitt der geblockten Linse mit einem Blockstück;
- Fig. 3: einen schematischen Schnitt eines Teils der Vorrichtung;
- Fig. 4: eine schematische Draufsicht der Vorrichtung;
- Fig. 5: eine schematische Draufsicht eines Arbeitsraums der Vorrichtung;
- Fig. 6: einen schematischen Schnitt des Arbeitsraums beim Abblocken; und
- Fig. 7: einen schematischen Schnitt des Arbeitsraums mit abgeblockter Linse.

In den Figuren werden für gleiche Komponenten und Bauteile die gleichen Bezugszeichen verwendet, auch wenn eine wiederholte Beschreibung weggelassen ist.

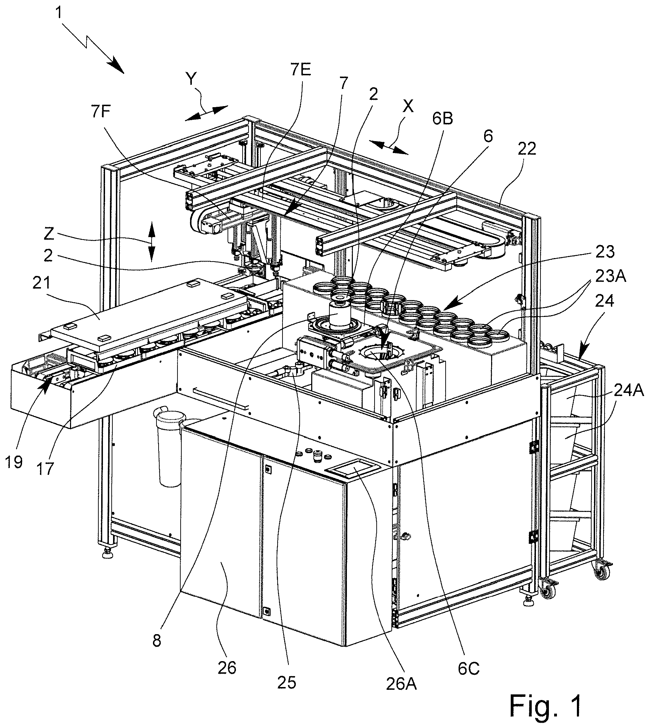

Fig. 1 zeigt in einer schematischen Ansicht eine vorschlagsgemäße Vorrichtung 1 zum Abblocken - also Lösen - mindestens einer Linse 2. Vorzugsweise ist die Vorrichtung 1 derart ausgebildet, dass mehrere Linsen 2 nacheinander abgeblockt werden können.

Besonders bevorzugt handelt es sich bei der Linse 2 um ein so genanntes Brillenglas, also eine Linse für eine Brille.

Die Linse 2 besteht vorzugsweise aus Kunststoff, kann gegebenenfalls aber auch aus Glas oder dergleichen bestehen.

Die Linse 2 weist vorzugsweise einen Durchmesser von mehreren Zentimetern, insbesondere von mehr als 3 Zentimetern auf.

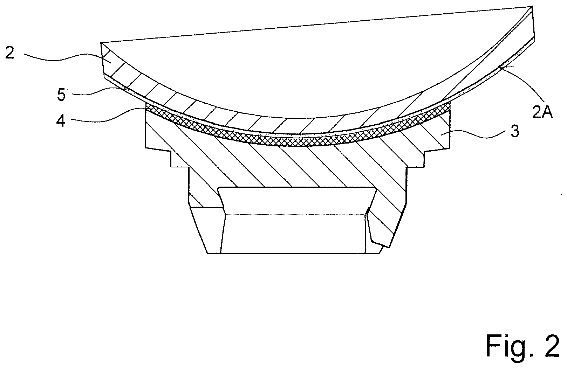

Fig. 2 zeigt in einem schematischen Schnitt eine Linse 2, die auf einem zugeordneten Blockstück 3 mittels eines Blockmaterials 4 geblockt, also temporär befestigt, ist.

Das Blockstück 3 ist insbesondere zu einer Einspannung mit definierter Drehlage für eine Bearbeitung der zugeordneten Linse 2 ausgebildet.

Das Blockmaterial 4 ist besonders bevorzugt ein Thermoplast, wie insbesondere in der WO 2011/018231 A1 beschrieben. Grundsätzlich kann es sich aber auch um eine Legierung mit niedrigem Schmelzpunkt oder um ein sonstiges Material, beispielsweise einen Klebstoff, einen Klebestreifen o. dgl. handeln.

Optional ist auf der dem Blockmaterial 4 bzw. Blockstück 3 zugewandten Seite bzw. Blockseite 2A der Linse 2 eine Schutzschicht bzw. Schutzfolie 5 angeordnet oder vorgesehen, wie in Fig. 2 schematisch angedeutet. Die Schutzfolie 5 ist vorzugsweise auf die Linse 2 bzw. Blockseite 2A der Linse 2 aufgeklebt und dient insbesondere einem Schutz dieser insbesondere schon fertig bearbeiteten bzw. geformten Flachseite bzw. Blockseite 2A der Linse 2.

Grundsätzlich ist es jedoch auch möglich, die Linse 2 ohne die Schutzschicht bzw. Schutzfolie 5 direkt mittels des Blockmaterials 4 zu blocken.

Nachfolgend wird immer von Schutzfolie 5 gesprochen, auch wenn es sich um eine sonstige Schutzschicht handeln kann, die optional auf die Blockseite 2A der Linse 2 aufgebracht werden kann. Die nachfolgenden Ausführungen bzw. Erläuterungen gelten dann insbesondere entsprechend.

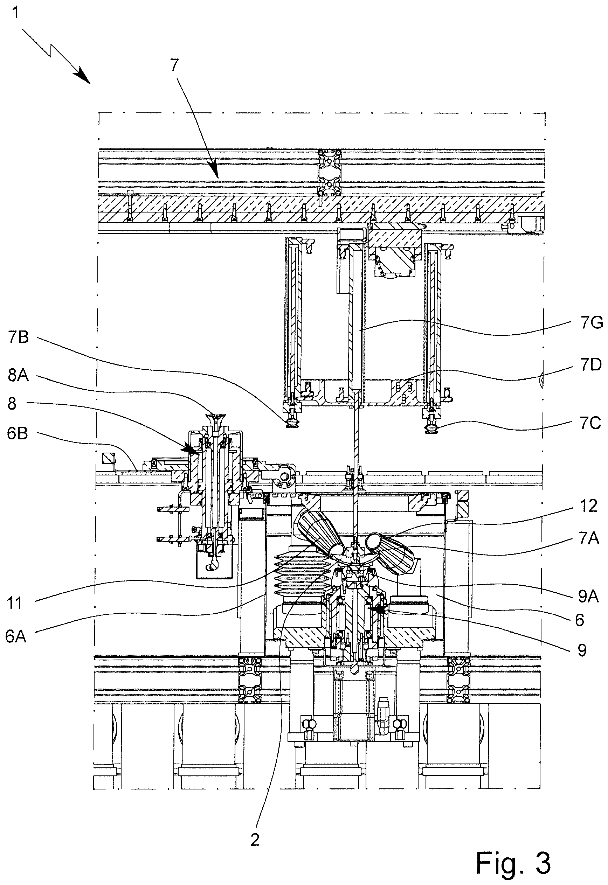

Die vorschlagsgemäße Vorrichtung 1 weist vorzugsweise einen Arbeitsraum 6 auf, in dem das Abblocken erfolgt. Die perspektivische Darstellung in Fig. 1 und der schematische Schnitt gemäß Fig. 3 zeigen die Vorrichtung 1 mit geöffnetem Arbeitsraum 6.

Die Vorrichtung 1 weist vorzugsweise eine Manipulationseinrichtung 7 zum Greifen bzw. Manipulieren der Linse 2 und/oder des Blockstücks 3 auf. In Fig. 3 ist schematisch angedeutet, wie die Manipulationseinrichtung 7 den Arbeitsraum 6 mit einer abzublockenden Linse 2 belädt bzw. beschickt.

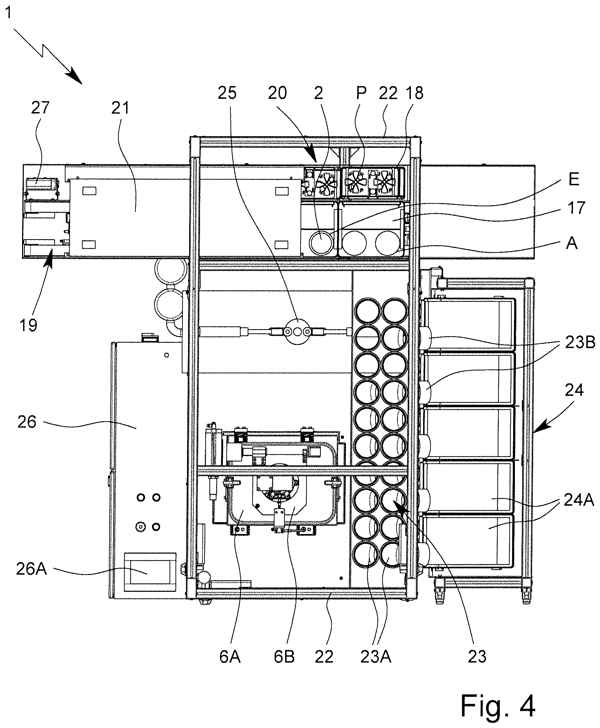

Fig. 4 zeigt in einer schematischen Draufsicht die Vorrichtung 1 ohne die Manipulationseinrichtung 7. Hier ist der Arbeitsraum 6 bzw. dessen Gehäuse 6A geschlossen.

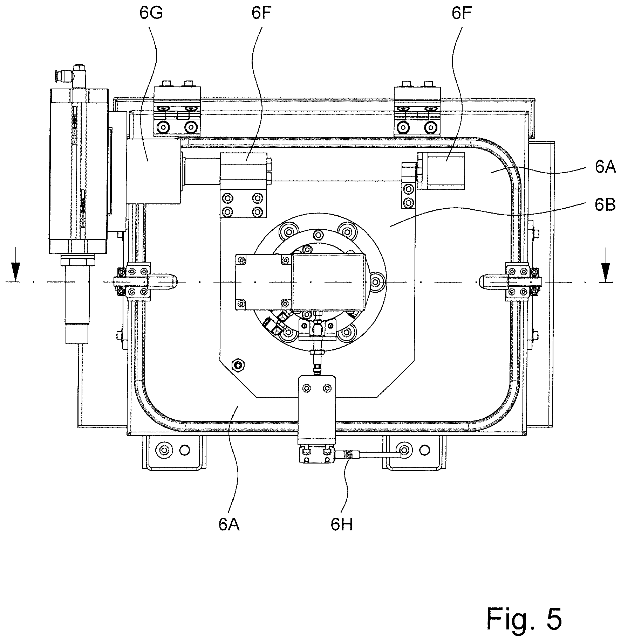

Fig. 5 zeigt in einer ausschnittsweisen, vergrößerten Draufsicht den Arbeitsraum 6 bzw. dessen Gehäuse 6A, der bzw. das insbesondere durch eine Klappe oder Tür 6B verschlossen (wie in Fig. 5 dargestellt) oder verschließbar ist. Jedoch sind hier auch andere konstruktive Lösungen möglich.

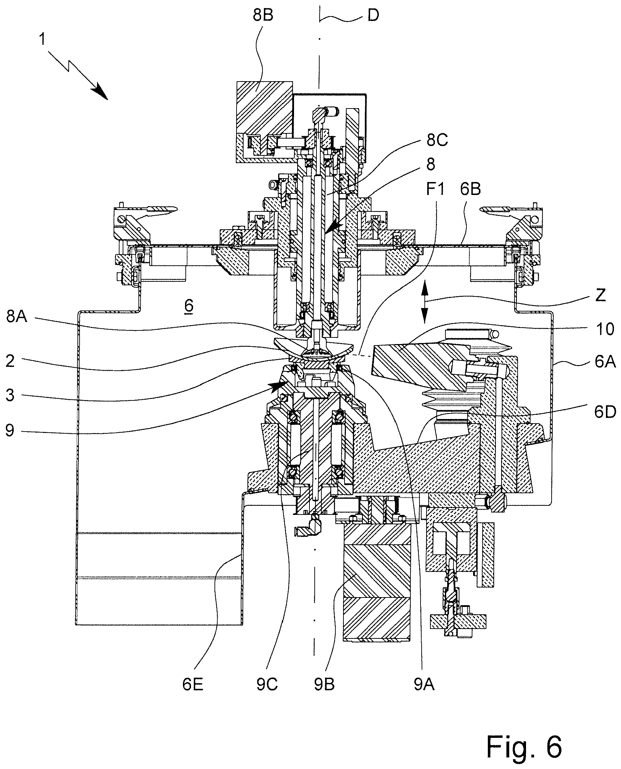

Fig. 6 zeigt in einem schematischen Schnitt die Vorrichtung 1 bzw. deren Arbeitsraum 6 beim Abblocken, also hier mit geschlossener Öffnung 6C bzw. geschlossener Tür 6B.

Die Vorrichtung 1 weist vorzugsweise eine erste Halteeinrichtung 8 zur insbesondere drehenden Halterung der Linse 2 beim Abblocken bzw. im Arbeitsraum 6 auf.

Insbesondere weist die erste Halteeinrichtung 8 einen Greifer bzw. Halter 8A zum insbesondere drehbaren Halten der Linse 2 auf.

Die Halteeinrichtung 8 bzw. der Halter 8A ist vorzugsweise zum pneumatischen Greifen oder Halten der Linse 2, insbesondere durch Unterdruck, ausgebildet. Vorzugsweise handelt es sich bei dem Halter 8A also um einen Sauger.

Die erste Halteeinrichtung 8 bzw. deren Halter 8A ist insbesondere derart ausgebildet, dass die Linse um die in Fig. 6 angedeutete Dreh- oder Zentralachse D drehbar oder rotierbar ist. Besonders bevorzugt weist die erste Halteeinrichtung 8 einen entsprechenden Motor bzw. Drehantrieb 8B auf, der beispielsweise über einen Riementrieb mit dem Halter 8A unmittelbar oder mittelbar, hier insbesondere über ein Lagerteil 8C gekoppelt ist.

Besonders bevorzugt ist die Halteeinrichtung 8 oder genauer gesagt deren Halter 8A linear bzw. axial und/oder entlang der Drehachse D, besonders bevorzugt teleskopisch, bewegbar bzw. verstellbar. Dies erfolgt besonders bevorzugt pneumatisch.

Die Vorrichtung 1 weist vorzugsweise eine zweite Halteeinrichtung 9 zur insbesondere drehenden Halterung des Blockstücks 3 beim Abblocken bzw. im Arbeitsraum 6 auf.

Insbesondere weist die zweite Halteeinrichtung 9 einen Halter 9A zum insbesondere drehbaren Halten des Blockstücks 3 auf.

Die Halteeinrichtung 9 bzw. der Halter 9A ist vorzugsweise zum klemmenden und/oder pneumatischen Halten des Blockstücks 3, insbesondere durch Unterdruck, ausgebildet. Vorzugsweise handelt es sich bei dem Halter 9A um ein Spannfutter oder eine Aufnahme.

Die erste Halteeinrichtung 9 bzw. deren Halter 9A ist insbesondere derart ausgebildet, dass das Blockstück 3 um die in Fig. 6 angedeutete Dreh- oder Zentralachse D drehbar oder rotierbar ist. Besonders bevorzugt weist die erste Halteeinrichtung 9A einen entsprechenden Motor bzw. Drehantrieb 9B auf, der beispielsweise über einen Riementrieb mit dem Halter 9A unmittelbar oder mittelbar, hier insbesondere über ein Lagerteil 9C, gekoppelt ist.

Das Abblocken, also Lösen der Linse 2 von dem Blockstück 3 bzw. Blockmaterial 4, erfolgt vorzugsweise mittels eines (ersten) Fluidstrahls F1, der insbesondere seitlich auf das Blockmaterial 4 bzw. den Grenzbereich zum Blockstück 3 und/oder zur Linse 2 bzw. Schutzfolie 5 hin auftrifft, während die Linse 2 und das Blockstück 3 um die Drehachse D rotieren bzw. gedreht werden. So wird insbesondere ein schnelles Ablösen der Linse 2 zusammen mit der Schutzfolie 5 von dem Blockmaterial 4, insbesondere innerhalb von einigen Sekunden, besonders bevorzugt weniger als 15 Sekunden, ermöglicht.

Die Drehachse D verläuft besonders bevorzugt quer zur Horizontalen und/oder zumindest im Wesentlichen vertikal bzw. in Z-Richtung.

Die Vorrichtung 1 weist vorzugsweise eine erste Düseneinrichtung 10 zur Erzeugung bzw. Abgabe des Fluidstrahls F1 auf. Die Düseneinrichtung 10 bzw. deren Düse 10A bzw. der Fluidstrahl F1 ist bedarfsweise radial und/oder parallel zur Drehachse D bzw. in einer Z-Richtung, hier insbesondere in vertikaler Richtung, und/oder in seiner Neigung relativ zur Drehachse D bewegbar bzw. verstellbar.

Besonders bevorzugt ist die erste Düseneinrichtung 10 feststehend eingebaut, so dass sich ein einfacher Aufbau ergibt.

Als Fluidstrahl F1 wird vorzugsweise ein Flüssigkeitsstrahl, insbesondere ein Wasserstrahl, eingesetzt. Der Fluidstrahl F1 steht vorzugsweise unter hohem Druck.

Der Fluidstrahl F1 bzw. die Flüssigkeit ist vorzugsweise vorgewärmt oder erwärmt, je nach eingesetztem Blockmaterial 4. Beispielsweise genügt es bei Verwendung eines Thermoplasten als Blockmaterial 4 das Fluid bzw. den Fluidstrahl F1 auf eine Temperatur vorzuwärmen, die geringer als die Schmelztemperatur des Thermoplasten ist. Beispielsweise liegt die Schmelztemperatur des Thermoplasten im Bereich von 60°C bis 70°C. Das Fluid bzw. Wasser W hat dann beispielsweise eine Temperatur zwischen 30°C und 50°C und/oder eine Temperatur, die mindestens 10°C unterhalb der Schmelztemperatur des Thermoplasten liegt. Bei Verwendung einer Legierung mit einem Schmelzpunkt von beispielsweise etwa 50 bis 60°C, wie derzeit üblich, wird das Fluid bzw. Wasser vorzugsweise um mehr als 10°C über den Schmelzpunkt erwärmt und weist vorzugsweise eine Temperatur von etwa 65 bis 90 °C auf.

Durch das Vorwärmen bzw. Erwärmen des Fluids bzw. der Flüssigkeit wird das Abblocken, insbesondere ein Weichwerden oder Schmelzen bzw. Lösen des Blockmaterials 4, insbesondere ein Lösen von der Schutzfolie 5 bzw. Linse 2, unterstützt.

Alternativ kann beim Abblocken die Linse 2 statt vom Blockmaterial 4 auch direkt von der Schutzfolie 5 gelöst werden. In diesem Fall trifft der Fluidstrahl F1 dann vorzugsweise im Bereich der Kontur der Schutzfolie 5 bzw. am Übergang der Schutzfolie 5 zur Linse 2 außen bzw. am Umfang auf, um den Abblockvorgang bzw. Lösevorgang zu bewirken.

Während des Abblockens wird die Linse 2 relativ von dem zugeordneten Blockstück 3 axial weg mittels einer Zugkraft vorzugsweise vorgespannt bzw. nach dem Abblocken nach oben gezogen und/oder axial abgerückt, hier insbesondere aufwärts bzw. durch Anheben der Linse 2.

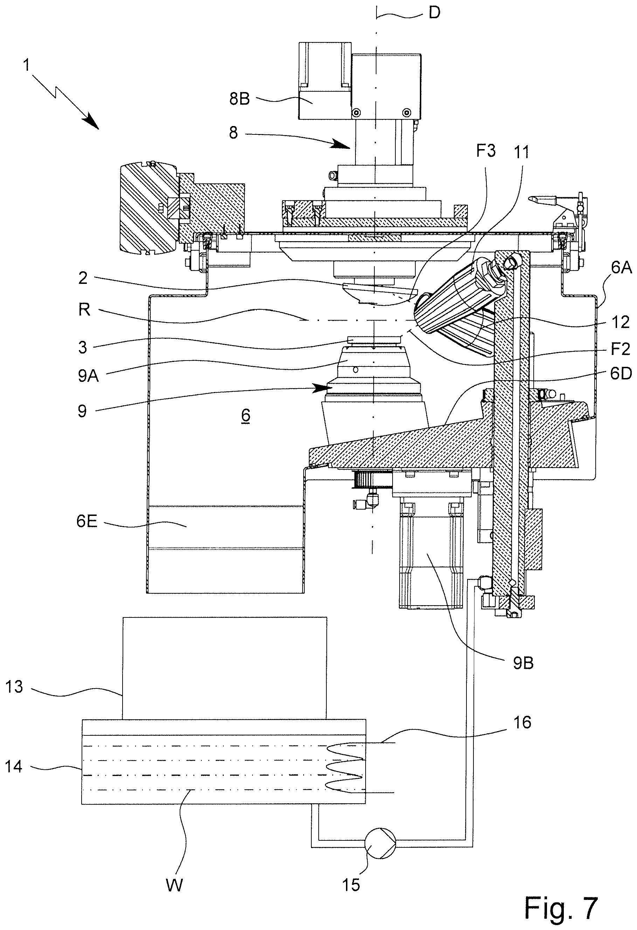

Fig. 7 zeigt in einem zu Fig. 6 ähnlichen schematischen Schnitt die Vorrichtung 1 bzw. den Arbeitsraum 6 nach dem Abblocken bzw. Abrücken einer Linse 2 vom zugeordneten Blockstück 3.

Vorzugsweise wird das Blockstück 3 nach dem Abblocken bzw. nach dem Abrücken der Linse 2 gereinigt bzw. anhaftendes Blockmaterial 4 entfernt. Dies erfolgt besonders bevorzugt mittels eines (zweiten) Fluidstrahls F2, wie in Fig. 7 schematisch angedeutet. Jedoch kann auch eine sonstige Reinigung in dem Arbeitsraum 6 bzw. in der Vorrichtung 1 oder danach erfolgen.

Beim Darstellungsbeispiel weist die Vorrichtung 1 vorzugsweise eine zweite Düseneinrichtung 11 zur Reinigung des Blockstücks 3 bzw. Entfernung von Blockmaterial 4 auf. Insbesondere dient die zweite Düseneinrichtung 11 der Abgabe bzw. Erzeugung des zweiten Fluidstrahls F2.

Die zweite Düseneinrichtung 11 ist vorzugsweise ebenso wie die erste Düseneinrichtung 10 im Arbeitsraum 6 angeordnet.

Insbesondere wird das Blockstück 3 zum oder beim Reinigen von der zweiten Halteeinrichtung 9 bzw. dessen Aufnahme oder Halter 9A gehalten und insbesondere dabei auch motorisch gedreht.

Der Fluidstrahl F2 zur Reinigung des Blockstücks 3 bzw. die zweite Düseneinrichtung 11 oder deren Düse ist vorzugsweise während oder zur Reinigung längs der Drehachse D bzw. in vertikaler oder Z-Richtung und/oder in seiner Neigung relativ zur Drehachse D bzw. dessen radialen Ebene variierbar, verstellbar und/oder oszillierbar, d. h. hin- und herbewegbar.

Vorzugsweise wird als Fluid für den Fluidstrahl F2 ebenfalls eine Flüssigkeit, insbesondere Wasser, eingesetzt. Insbesondere wird das Fluid mit hohem Druck auf das Blockstück 3, insbesondere dessen der Linse 2 zugewandte Seite bzw. Flachseite (Blockseite) gespritzt.

Das Fluid für den Fluidstrahl F2 ist vorzugsweise vorgewärmt oder erwärmt.

Insbesondere wird das gleiche bzw. selbe bzw. genauso vorgewärmte Fluid wie für das Abblocken bzw. wie für den (ersten) Fluidstrahl F1 eingesetzt.

Die optionale Schutzfolie 5 wird von der abgeblockten Linse 2 im Arbeitsraum 6 bzw. in der Vorrichtung 1 entfernt. Dies erfolgt besonders bevorzugt mittels eines (dritten) Fluidstrahls F3 in der in Fig. 7 dargestellten, von dem Blockstück 3 abgerückten Position.

Beim Darstellungsbeispiel weist die Vorrichtung 1 eine dritte bzw. zusätzliche Düseneinrichtung 12 zur Entfernung von Blockmaterial 4 und/oder der optionalen Schutzfolie 5 von der abgeblockten Linse 2 auf. Diese ist ebenso wie die erste und/oder zweite Düseneinrichtung 10, 11 im Arbeitsraum 6 angeordnet. Insbesondere wird die Linse 2 zum Entfernen von Blockmaterialresten und/oder der Schutzfolie 5 von der ersten Halteeinrichtung 8 gehalten und dabei auch motorisch gedreht.

Der dritte Fluidstrahl F3 bzw. die dritte oder zusätzliche Düseneinrichtung 12 bzw. deren Düse ist vorzugsweise während oder zur Entfernung längs der Drehachse D bzw. in vertikaler oder Z-Richtung und/oder in seiner Neigung relativ zur Drehachse D bzw. dessen radialen Ebene rotierbar, verstellbar und/oder oszillierbar.

Vorzugsweise wird als Fluid für den Fluidstrahl F3 ebenfalls eine Flüssigkeit, insbesondere Wasser, eingesetzt. Insbesondere wird das Fluid mit hohem Druck auf die Linse 2, insbesondere deren Blockseite 2A, gespritzt.

Das Fluid für den Fluidstrahl F3 ist vorzugsweise vorgewärmt oder erwärmt.

Insbesondere wird das gleiche oder selbe bzw. genauso vorgewärmte Fluid wie für das Abblocken bzw. wie für den ersten und/oder zweiten Fluidstrahl F1, F2 eingesetzt.

Die (zweite) Düseneinrichtung 11 bzw. der (zweite) Fluidstrahl F2 ist auf das (abgeblockte) Blockstück 3 gerichtet bzw. diesem zugeordnet.

Die (dritte) Düseneinrichtung 12 bzw. der (dritte) Fluidstrahl F3 ist auf die (abgeblockte) Linse 2 gerichtet bzw. dieser zugeordnet.

Besonders bevorzugt sind die Düseneinrichtungen 11, 12 bzw. Fluidstrahlen F2, F3 jeweils relativ zu einer Radialebene R der Drehachse D und/oder entgegengesetzt geneigt, wie in Fig. 7 angedeutet.

Vorzugsweise sind die Düseneinrichtungen 11 und/oder 12 bzw. Fluidstrahlen F2 und/oder F3 derart hin- und her bewegbar, also oszillierbar, dass ausschließlich jeweils die Blockseite des Blockstücks 3 und/oder der Linse 2 - insbesondere auch unter Berücksichtigung der dabei vorzugsweise erfolgenden Drehung von Blockstück 3 bzw. Linse 2 - vollständig überstrichen bzw. gereinigt wird. Besonders bevorzugt erfolgt als oszillierende Bewegung hier eine vorzugsweise ausschließlich lineare Bewegung der Düseneinrichtung 11 und/oder 12 insbesondere längs bzw. parallel zu der Drehachse D.

Die Vorrichtung 1 bzw. der Arbeitsraum 6 oder dessen Gehäuse 6A weist vorzugsweise einen geneigten Boden 6D und/oder einen Ablauf 6E auf, um ein Herausspülen bzw. Abtransportieren oder Herausfließen von gelöstem Blockmaterial 4, gelösten Schutzfolien 5 und Flüssigkeiten zu ermöglichen bzw. zu gewährleisten.

Vorzugsweise ist unter dem Arbeitsraum 6 bzw. Ablauf 6E ein Auffangbehälter 13, insbesondere zum Auffangen von Feststoffen, wie Blockmaterial 4 und Schutzfolien 5, angeordnet oder positionierbar.

Der Auffangbehälter 13 lässt vorzugsweise Fluide bzw. Flüssigkeiten, insbesondere das zum Abblocken eingesetzte Wasser oder dergleichen, vorzugsweise durch einen Gitterboden, abfließen, insbesondere in einen darunter angeordneten Tank 14, wie in Fig. 7 nur schematisch angedeutet.

Das Wasser W bzw. die sonstige Flüssigkeit wird dann zum weiteren Abblocken von anderen Linsen 2 wieder verwendet bzw. rezirkuliert und insbesondere über eine Pumpe 15 bzw. Hochdruckpumpe den Düseneinrichtungen 10, 11 und/oder 12 über eine in Fig. 7 angedeutete Leitung zugeleitet bzw. zugeführt. Jedoch sind auch andere konstruktive Lösungen möglich.

Besonders bevorzugt ist der Auffangbehälter 13 wechsel- und/oder entleerbar.

Der Tank 14 ist vorzugsweise mit einem nicht dargestellten Sensor oder dergleichen zur Überwachung des Flüssigkeitsstands versehen.

Weiter weist die Vorrichtung 1 vorzugsweise eine Temperiereinrichtung 16 zur Temperierung der Flüssigkeit auf. Die Temperiereinrichtung 16 ist in Fig. 7 nur schematisch angedeutet und kann beispielsweise im Tank 14 angeordnet sein, um die Flüssigkeit im Tank 14 auf eine gewünschte Temperatur zu erwärmen oder zu halten.

Alternativ oder zusätzlich kann die Temperiereinrichtung 16 auch beispielsweise in einer Fluidzuleitung, beispielsweise stromauf oder stromab der Pumpe 15, angeordnet sein und beispielsweise im Durchlauf die Flüssigkeit auf die gewünschte Temperatur erwärmen.

Nach dem Abblocken und insbesondere Reinigen (hier mittels der Fluidstrahlen F2 und F3) werden die abgeblockte Linse 2 und das abgeblockte Blockstück 3 dem Arbeitsraum 6 entnommen.

Insbesondere wird die Linse 2 nach dem Abblocken von dem Blockstück 3 weggeschwenkt. Dies erfolgt insbesondere nach dem axialen Abrücken der Linse 2 relativ zum Blockstück 3 und/oder nach dem Reinigen der Linse 2 bzw. Entfernen der Schutzfolie 5 und/oder nach dem Reinigen des Blockstücks 3.

Besonders bevorzugt erfolgt das Öffnen des Arbeitsraums 6 bzw. der Tür 6B erst nach Abschluss der genannten Reinigungsschritte.

Besonders bevorzugt erfolgt das Wegschwenken der abgeblockten Linse 2 durch das Öffnen des Arbeitsraums 6 bzw. der Tür 6B und/oder ohne Umgreifen, insbesondere durch Wegschwenken der ersten Halteeinrichtung 8 zusammen mit der davon gehaltenen Linse 2.

Fig. 3 zeigt den Zustand mit geöffneter Tür 6B und mit weggeschwenkter bzw. herausgeschwenkter Linse 2.

Besonders bevorzugt ist die erste Halteeinrichtung 8 schwenkbar gelagert, hier zusammen mit der Tür 6B.

Beim Darstellungsbeispiel sind vorzugsweise eine Schwenklagerung 6F und ein Schwenkantrieb 6G für die Tür 6B bzw. erste Halteeinrichtung 8 vorgesehen, wie insbesondere in Fig. 5 angedeutet.

Besonders bevorzugt wird die Linse 2 nach dem Abblocken und/oder aus dem Arbeitsraum 6 heraus insbesondere um mehr als 90°, bevorzugt etwa um 180° geschwenkt. Diese Schwenkbewegung stellt vorzugsweise die einzige (erforderliche) Schwenk- oder Kippbewegung der Linse 2 in der Vorrichtung 1 dar. Besonders bevorzugt benötigt daher die Manipulationseinrichtung 7 keine Schwenk- oder Kippachse, so dass ein sehr einfacher und damit kostengünstiger Aufbau ermöglicht wird.

Die Linse 2 wird also nach dem Abblocken und insbesondere nach dem Reinigen bzw. Entfernen der optionalen Schutzfolie 5, vorzugsweise durch Öffnen des Arbeitsraums 6, von dem abgeblockten Blockstück 3 weggeschwenkt und/oder gewendet. Dies ermöglicht bei einfachem Aufbau einen optimierten Verfahrensablauf.

Die abgeblockte Linse 2 wird vorzugsweise wieder an einen (großen) Transportträger 17 abgegeben, der bereits einer Zuförderung der noch geblockten Linse 2 gedient hat, oder an einen anderen (kleinen) Transportträger 18, der beispielsweise eine andere Größe oder Form aufweist und insbesondere kleiner als der Transportträger 17 ist, wie in Fig. 4 schematisch angedeutet, um die abgeblockte Linse 2 dann weiter zu fördern. Danach erfolgt insbesondere eine weitere Bearbeitung bzw. ein Beschichten oder dergleichen.

Die abgeblockte Linse 2 wird vorzugsweise mit ihrer Blockseite 2A nach oben in den Transportträger 17 oder 18 abgelegt. Dies ist vorschlagsgemäß aufgrund des Wendens oder Schwenkens der Linse 2 sehr einfach möglich. Durch diese Art der Ablage liegt die meistens nur mit ihrem Rand in dem Transportträger 17 bzw. 18 auf, da die der Blockseite 2A gegenüberliegende Bearbeitungsseite der Linse 2 meistens konkav ausgebildet ist.

Die Transportträger 17, 18 sind vorzugsweise kistenartig ausgebildet.

Die Transportträger 17, 18 bieten vorzugsweise Platz für mindestens zwei Linsen 2, also insbesondere für mindestens ein Paar von Linsen 2, wie bei der Brillenglasfertigung üblich.

Die Zuförderung der geblockten Linsen 2 bzw. Transportträger 17 mit geblockten Linsen 2 und/oder die Weiterförderung der abgeblockten Linsen 2 bzw. Transportträger 17 oder 18 mit abgeblockten Linsen 2 erfolgt vorzugsweise über eine gemeinsame Fördereinrichtung oder getrennte Fördereinrichtungen, die insbesondere einen Teil der Vorrichtung 1 bilden oder dieser zugeordnet sein kann oder können.

Beim Darstellungsbeispiel weist die Vorrichtung 1 vorzugsweise eine Zufördereinrichtung 19 zur Zuförderung der geblockten Linsen 2 bzw. von Transportträgern 17 mit geblockten Linsen 2 auf. Diese Zufördereinrichtung 19 kann bedarfsweise auch der Weiterförderung der Linsen 2 nach dem Abblocken bzw. der Transportträger 17 oder 18 mit den abgeblockten Linsen 2 dienen.

Optional weist die Vorrichtung 1 beim Darstellungsbeispiel eine Weiterfördereinrichtung 20 zur Weiterförderung der abgeblockten Linsen 2, insbesondere der - vorzugsweise kleineren - Transportträger 18 mit den abgeblockten Linsen 2 auf, wie in Fig. 4 schematisch angedeutet.

Besonders bevorzugt werden Bandförderer für die Förderung bzw. als Fördereinrichtung 19 und/oder 20 eingesetzt.

Besonders bevorzugt erfolgt ein Erwärmen oder Vorwärmen des Blockmaterials 4 der noch geblockten Linsen 2, bevor das eigentliche Abblocken erfolgt. Das Erwärmen bzw. Vorwärmen erfolgt vorzugsweise noch vor dem Entnehmen der geblockten Linsen 2 aus den Transportträgen 17 und/oder im Bereich der Zuförderung bzw. an der Zufördereinrichtung 19.

Besonders bevorzugt weist die Vorrichtung 1 eine Wärmeeinrichtung 21 zur Erwärmung oder Vorwärmung des Blockmaterials 4 auf.

Das Erwärmen oder Vorwärmen erfolgt vorzugsweise auf weniger als 40 oder 50°C, je nach verwendetem Blockmaterial 4 bzw. Thermoplast, und/oder vorzugsweise mittels Strahlung, insbesondere mittels Infrarot-Strahlung oder Mikrowellenstrahlung.

Die Wärmeeinrichtung 21 ist vorzugsweise im Bereich der Zufördereinrichtung 19, insbesondere oberhalb, wie in Fig. 1 dargestellt, angeordnet, um das Blockmaterial 4 der geblockten Linsen 2 von oben zu bestrahlen bzw. noch vor der Entnahme aus den Transportträgern 17 zu bestrahlen bzw. zu erwärmen.

Nach der Erwärmung bzw. Vorwärmung erfolgt eine Entnahme der geblockten Linse 2 insbesondere an einer Entnahmeposition E, die in Fig. 4 schematisch angedeutet ist, mittels der Manipulationseinrichtung 7.

Die Vorrichtung 1 bzw. Manipulationseinrichtung 7 weist vorzugsweise unabhängig arbeitende und/oder unabhängig teleskopierbare Greifer 7A, 7B und 7C auf, um die geblockte Linse 2, also die Linse 2 zusammen mit dem zugeordneten Blockstück 3, die abgeblockte Linse 2 und/oder das abgeblockte Blockstück 3 insbesondere unabhängig voneinander oder gleichzeitig manipulieren bzw. greifen und insbesondere auch aufnehmen, fördern und/oder ablegen zu können, wie in den Fig. 1 und 3 schematisch angedeutet.

Die Vorrichtung 1 bzw. Manipulationseinrichtung 7 weist vorzugsweise einen bewegbaren Träger 7D auf, der die Greifer 7A bis 7C trägt oder hält.

Der Träger 7D ist vorzugsweise nur in einer Richtung - hier der X-Richtung - oder nur in einer Ebene - hier der XY-Ebene - bewegbar oder verschiebbar.

Die X-Richtung verläuft vorzugsweise horizontal und/oder vorzugsweise quer bzw. senkrecht zu der Drehachse D bzw. Z-Richtung und/oder Y-Richtung bzw. Zuförderrichtung der Zufördereinrichtung 19.

Die Y-Richtung verläuft vorzugsweise horizontal und/oder parallel zu der Zuförderrichtung.

Die X-Richtung und die Y-Richtung spannen vorzugsweise die XY-Ebene auf, in der der Träger 7D bewegbar bzw. positionierbar ist.

Die Vorrichtung 1 bzw. Manipulationseinrichtung 7 weist vorzugsweise eine entsprechende Führung, hier eine Linearführung 7E in X-Richtung und/oder eine Linearführung 7F in Y-Richtung mit entsprechenden Antrieben, auf, um die gewünschte Verstellbarkeit bzw. Positionierung in X- und/oder Y-Richtung des Trägers 7D bzw. der Greifer 7A bis 7C zu ermöglichen.

Besonders bevorzugt ist die Manipulationseinrichtung 7 oberhalb des Arbeitsraums 6 und/oder der Zufördereinrichtung 19 angeordnet und/oder an einem Gestell 22 der Vorrichtung 1 befestigt.

Nachfolgend wird ein bevorzugter Aufbau der Greifer 7A bis 7C näher erläutert, wobei diese zumindest im Wesentlichen gleichartig oder gegebenenfalls sogar identisch, aufgebaut sind, so dass nachfolgend lediglich der Aufbau eines Greifers näher erläutert wird.

Der Greifer ist vorzugsweise nur in einer Richtung, hier Z-Richtung, und/oder quer bzw. senkrecht zu der Bewegungsrichtung X oder Bewegungsebene XY des Trägers 7D bewegbar, verstellbar bzw. teleskopierbar. Dementsprechend weist der Greifer eine Stelleinrichtung 7G auf, die insbesondere pneumatisch arbeitet, und insbesondere einen Stellzylinder bzw. Pneumatikzylinder umfasst.

Der Greifer arbeitet vorzugsweise pneumatisch, insbesondere mit Unterdruck. Besonders bevorzugt ist der Greifer als Sauger ausgebildet oder weist einen solchen auf. Jedoch sind auch andere konstruktive Lösungen möglich.

Insbesondere weist die Stelleinrichtung 7G nur zwei Anschläge auf, zwischen denen der Greifer, hier in Z-Richtung, vor- und zurückbewegbar ist. Ein definiertes Anhalten zwischen diesen Anschlägen ist nicht vorgesehen, vielmehr trifft der Greifer beim Greifen durch Vorwärtsbewegen bzw. Absenken auf den zu greifenden Gegenstand, also die Linse 2 oder das Blockstück 3, bevor der entsprechende Anschlag erreicht wird.

Nach dem Greifen bzw. Ansaugen der Linse 2 bzw. des Blockstücks 3 kann die Stelleinrichtung 7 in entgegengesetzter Richtung bzw. aufwärts wieder zurück an den die Rückbewegung begrenzenden Anschlag bewegt werden. Dies erfolgt insbesondere durch entsprechende pneumatische Beaufschlagung. So wird ein sehr einfacher Aufbau ermöglicht.

Nachfolgend wird ein bevorzugter Verfahrensablauf näher erläutert, wobei einzelne Verfahrensschritte generell auch unabhängig von den anderen Verfahrensschritten oder gegebenenfalls auch in anderer Reihenfolge erfolgen können.

Die geblockten Linsen 2 werden insbesondere in Transportträgern 17, 18 zugefördert.

Die geblockten Linsen 2 sind vorzugsweise mit ihren Blockstücken 3 nach unten weisend bzw. mit vertikaler bzw. zu der Drehachse D paralleler Zentralachse in die Transportträger 17 eingesetzt. Jedoch ist grundsätzlich auch jede andere beliebige Zuförderung möglich.

Bei der Zuförderung erfolgt vorzugsweise eine Vorwärmung oder Erwärmung des Blockmaterials 4, insbesondere mittels der Wärmeeinrichtung 21 bzw. Strahlung, insbesondere Infrarot- oder Mikrowellenstrahlung. Die Vorwärmung erfolgt vorzugsweise von oben und/oder durch die Linse 2 hindurch bzw. linsenseitig. Die Vorwärmung erfolgt vorzugsweise bei der Zuführung bzw. auf der Zufördereinrichtung 19 und/oder vor Erreichen der Entnahmeposition E.

Eine geblockte Linse 2 wird von dem Greifer 7A aus der Entnahmeposition E bzw. dem Transportträger 17 aufgenommen. Hierzu wird der Träger 7D bzw. Greifer 7A entsprechend über der Linse 2 positioniert und von dem Greifer 7A gegriffen und angehoben. Fig. 1 zeigt schematisch die bereits angehobene Linse 2.

Anschließend wird die Linse 2 zu dem Arbeitsraum 6 bewegt, um diesen mit der geblockten Linse 2 zu beschicken bzw. zu beladen.

Wenn eine andere Linse 2 bereits abgeblockt wurde oder wird, wird zugewartet, bis das Abblocken beendet ist und bis der Arbeitsraum 6 geöffnet bzw. die erste Halteeinrichtung 8 und/oder abgeblockte Linse 2 herausgeschwenkt wird oder wurde.

Die abgeblockte Linse 2 weist nach dem Wegschwenken von dem Blockstück 3 bzw. bei (vollständig) geöffneter Tür 6B und/oder herausgeschwenkter Halteeinrichtung 8 mit ihrer Blockseite 2A vorzugsweise nach oben und/oder mit ihrer Zentralachse zumindest im Wesentlichen parallel zur Drehachse D bzw. in vertikaler Richtung.

Vor dem Beschicken bzw. Beladen des Arbeitsraums 6 mit der nächsten geblockten Linse 2 erfolgt eine Aufnahme bzw. Entnahme der abgeblockten Linse 2 (hier von der ersten Halteeinrichtung 8 bzw. deren Halter 8A) und/oder des abgeblockten Blockstücks 3 (hier aus dem Arbeitsraum 6 bzw. von der zweiten Halteeinrichtung 9 bzw. deren Aufnahme 9A). Dieses Aufnehmen oder Greifen erfolgt durch die Manipulationseinrichtung 7, insbesondere durch entsprechende Positionierung des Trägers 7D bzw. der Greifer 7B und 7C.

Besonders bevorzugt werden die abgeblockte Linse 2 und das abgeblockte Blockstück 3 simultan und/oder von den separaten Greifern 7B und 7C aufgenommen, um einen schnellen Verfahrensablauf zu ermöglichen.

Besonders bevorzugt sind die Greifer 7B und 7C so an dem Träger 7D angeordnet, dass ohne weitere Bewegung oder Verschiebung des Trägers 7D die beiden Greifer 7B und 7C die abgeblockte Linse 2 bzw. das abgeblockte Blockstück 3 erfassen und aufnehmen, insbesondere anheben können. Insbesondere wird so ein simultanes Greifen bzw. Aufnehmen der abgeblockten Linse 2 und des abgeblockten Blockstücks 3 ermöglicht. Dies ist einem schnellen Linsenwechsel und damit einem schnellen Verfahrensablauf zuträglich.

Beim Darstellungsbeispiel entspricht vorzugsweise der Abstand der Greifer 7B und 7C dem - hier horizontalen - Abstand zwischen der ersten Halteeinrichtung 8 bzw. des Halters 8A im aufgeklappten oder aus dem Arbeitsraum 6 herausgeschwenkten Zustand einerseits und der Drehachse D bzw. der zweiten Halteeinrichtung 9 oder deren Aufnahme 9A andererseits.

Anschließend kann der erste Greifer 7A mit der geblockten Linse 2 über dem Arbeitsraum 6 bzw. der zweiten Halteeinrichtung 9 positioniert werden und die geblockte Linse 2 mit ihrem Blockstück 3 an die zweite Halteeinrichtung 9 bzw. Aufnahme 9A übergeben. Dies erfolgt hier durch entsprechendes Absenken des Greifers 7A.

Die zweite Halteeinrichtung 9 bzw. Aufnahme 9A ist vorzugsweise mit einem flexiblen und/oder ringartigen Gummi- oder Halteelement versehen und/oder zur klemmenden und/oder pneumatischen Halterung des Blockstücks 3 ausgebildet.

Vorzugsweise weist die Halteeinrichtung 9 bzw. Aufnahme 9A ein Spannfutter auf, um das Blockstück 3 und damit auch die geblockte Linse 2 in seiner Drehlage definiert halten oder aufnehmen zu können. Dies ist insbesondere beim Aufnehmen wesentlich, da die geblockten Linsen 2 üblicherweise mit einer definierten Drehlage zugefördert und von der Manipulationseinrichtung 7 mit einer definierten Drehlage an die Halteeinrichtung 9 übergeben werden. Das Spannfutter ermöglicht dann ein bezüglich der Drehlage definiertes Einspannen oder Halten des Blockstücks 3.

Insbesondere wird die Aufnahme 9A bzw. das Spannfutter immer in derselben Drehlage nach dem Drehen angehalten, um einen problemlosen Wechsel des Blockstücks 3, insbesondere ein Aufnehmen eines neuen Blockstücks 3 mit definierter Drehlage zu ermöglichen.

Es ist anzumerken, dass die Manipulationseinrichtung 7 vorzugsweise ausschließlich lineare Bewegungen - also keine Schwenk- oder Kippbewegungen - ausführt, um den Arbeitsraum 6 bzw. die zweite Halteeinrichtung 9 mit der geblockten Linse 2 und dem zugeordneten Blockstück 3 zum Abblocken zu beschicken. Entsprechende Bewegungen genügen auch für das spätere Aufnehmen der abgeblockten Linse 2 und Ablegen in einem Transportträger 17 oder 18. Dementsprechend kann die Manipulationseinrichtung 7 sehr einfach und kostengünstig aufgebaut sein.

Nach dem Herausfahren des Greifers 7A wird der Arbeitsraum 6 geschlossen. Dies erfolgt insbesondere durch Verschließen der Öffnung 6C bzw. Tür 6B. Beim Darstellungsbeispiel erfolgt dies mittels des Schwenkantriebs 6G.

Der Schwenkantrieb 6G arbeitet vorzugsweise pneumatisch, hydraulisch oder elektrisch.

Die Schwenkachse der Schwenklagerung 6F verläuft vorzugsweise horizontal und/oder parallel zur Y-Richtung.

Vorzugsweise weist die Vorrichtung 1 eine Einrichtung 6H zur Verriegelung der Tür 6B im geschlossenen Zustand und/oder zur Erkennung des geschlossenen Zustands der Tür 6B auf, wie in Fig. 5 schematisch angedeutet.

Nach dem Zurückschwenken der ersten Halteeinrichtung 8 in den Arbeitsraum 6 bzw. Verschließen des Arbeitsraums 6 wird der Halter 8A vorzugsweise an die abzublockende Linse 2, hier durch axiales Absenken, insbesondere pneumatisch, angelegt und greift diese (hier durch Ansaugen). Hierzu ist beispielsweise das Lagerteil 8C axial bezüglich der Drehachse D bewegbar bzw. bildet einen Teil eines Stellantriebs oder Pneumatikzylinders.

Zum Abblocken werden die Linse 2 und das Blockstück 3 im Arbeitsraum 6 in Drehung versetzt und wird eine Hub- oder Zugkraft (hier mittels der ersten Halteeinrichtung 8 bzw. des Halters 8A und/oder der zweiten Halteeinrichtung 9 bzw. des Halters 9A) ausgeübt, um die Linse 2 und das Blockstück 3 axial voneinander weg vorzuspannen. Insbesondere erfolgt hierzu eine pneumatische Beaufschlagung, besonders bevorzugt zur Erzeugung einer relativ geringen Abrückkraft oder Hubkraft, um die gegriffene bzw. angesaugte Linse (etwas) von dem Blockstück 3 weg in axialer Richtung vorzuspannen.

Die Linse 2 und das Blockstück 3 werden durch die entsprechenden Drehantriebe 8B und 9B motorisch in Drehung versetzt.

Der erste Fluidstrahl F1, der insbesondere als warmer Flüssigkeitsstrahl und insbesondere mit großem Druck auf das Blockmaterial 4 bzw. dessen Übergangsbereich zu dem Blockstück 3 und/oder der Linse 2 bzw. Schutzfolie 5 trifft, führt zu einer (weiteren) Erweichung und/oder zu einem insbesondere schnellen Lösen der Linse 2 bzw. Schutzfolie 5 von dem Blockstück 3 bzw. Blockmaterial 4.

Nach dem Lösen bzw. Abblocken werden die Linse 2 und das Blockstück 3 axial voneinander abgerückt bzw. auseinanderbewegt. Insbesondere wird die Linse 2 angehoben oder wegbewegt, besonders bevorzugt aufgrund der insbesondere pneumatischen Vorspannung.

Besonders bevorzugt wird der Halter 8A so weit zurückgezogen oder angehoben, bis ein definierter oder einheitlicher Anschlag erreicht wird. Hierdurch wird die Linse 2, insbesondere auch bei unterschiedlichen Linsendicken, so weit von dem Blockstück 3 abgerückt, dass ein für die nachfolgende Reinigung oder Entfernung von Blockmaterial 4 bzw. Schutzfolie 5 ausreichender axialer Abstand, besonders bevorzugt von mehr als 5 mm, insbesondere mehr als 10 mm, und insbesondere von etwa 2 cm oder mehr erreicht wird.

Anschließend erfolgt das optionale, bevorzugte Reinigen des Blockstücks 3 bzw. Entfernen des Blockmaterials 4 vom Blockstück 3 mittels des zweiten Fluidstrahls F2 und/oder das bevorzugte Entfernen der Schutzfolie 5 bzw. von Blockmaterialresten von der Linse 2 mittels des dritten Fluidstrahls F3. Beides erfolgt vorzugsweise simultan und/oder im selben Arbeitsraum 6 wie das Abblocken, so dass ein sehr einfacher und schneller Verfahrensablauf ermöglicht wird.

Es ist anzumerken, dass für das Reinigen des Blockstücks 3 gegebenenfalls auch die erste Düseneinrichtung 10 bzw. der erste Fluidstrahl F1 eingesetzt werden kann, insbesondere wenn die erste Düseneinrichtung 10 bzw. der erste Fluidstrahl F1 in geeigneter Weise verstellbar ist.

Weiter ist anzumerken, dass anstelle des dritten Fluidstrahls F3 bzw. der zusätzlichen Düseneinrichtung 12 grundsätzlich auch die erste oder zweite Düseneinrichtung 10, 11 bzw. der erste oder zweite Fluidstrahl F1, F2 für das Entfernen der Schutzfolie 5 bzw. von Blockstückresten von der Linse 2 eingesetzt werden kann, insbesondere wenn eine entsprechende Verstellbarkeit der Düseneinrichtung 10 bzw. 11 bzw. des Fluidstrahls F1 bzw. F2 vorgesehen wird.

Wie bereits erwähnt weist die Vorrichtung 1 vorzugsweise eine Pumpe 15 zur entsprechenden Versorgung der Düseneinrichtungen 10 bis 12 mit dem Fluid, hier insbesondere Wasser W oder einer sonstigen Flüssigkeit auf.

Besonders bevorzugt wird das Fluid bzw. Wasser W gefiltert, insbesondere mehrstufig und/oder mittels eines nicht dargestellten Feinfilters, besonders bevorzugt so dass Partikel über 1 µm oder 2 µm herausgefiltert werden, um eine Beschädigung der Linse 2 durch die Fluidstrahlen F1, F2, F3 zu vermeiden.

Die Versorgung erfolgt insbesondere mit dem gewünschten Druck, und/oder es wird der Druck über entsprechende Steuer- oder Regelventile eingestellt.

Weiter erfolgt vorzugsweise eine gewünschte Temperierung oder Vorwärmung der Flüssigkeit bzw. des Wassers W, um das Abblocken und anschließende Reinigen bzw. Entfernen zu erleichtern bzw. zu beschleunigen oder erst zu ermöglichen.

Die Manipulationseinrichtung 7 hält nach dem Beladen bzw. Beschicken des Arbeitsraums 6 mit der (neuen) geblockten Linse 2, normalerweise noch die zuvor aufgenommene abgeblockte Linse 2 und das aufgenommene Blockstück 3.

Das abgeblockte und vorzugsweise gereinigte Blockstück 3 kann bedarfsweise über den Transportträger 17 oder auf sonstige Weise ausgegeben oder wieder abgegeben werden.

Besonders bevorzugt werden die gereinigten Blockstücke 3 sortiert. Insbesondere weist die Vorrichtung 1 hierzu eine Sortiereinrichtung 23 auf, die in Fig. 4 angedeutet ist.

Beim Darstellungsbeispiel weist die Sortiervorrichtung 23 vorzugsweise verschiedene Aufnahmeöffnungen 23A auf, an die die Blockstücke 3 je nach Form und/oder Größe abgegeben werden. Vorzugsweise werden die Blockstücke 3 über Rutschen oder Rohre 23B sortiert ausgegeben, hier besonders bevorzugt an einen zugeordneten Transportwagen 24 bzw. an zugeordnete Aufnahmebehälter 24A, wie in Fig. 4 angedeutet.

Die abgeblockte Linse 2 wird optional insbesondere optisch überprüft, vorzugsweise dahingehend ob diese korrekt gereinigt wurde und/oder unerwünschte Anhaftungen von Blockmaterial 4, der Schutzfolie 5 oder dergleichen oder sonstige Verschmutzungen aufweist.

Die Vorrichtung 1 weist vorzugsweise eine Prüfeinrichtung 25 auf, um die genannte Prüfung oder eine sonstige Prüfung der abgeblockten Linse 2 vornehmen zu können.

Die Prüfeinrichtung 25 ist vorzugsweise zwischen dem Arbeitsraum 6 und der Zufördereinrichtung 19 angeordnet.

Die Prüfeinrichtung 25 ist vorzugsweise derart angeordnet, dass die Manipulationseinrichtung 7 bzw. der die abgeblockte Linse 2 haltende Greifer 7B die abgeblockte Linse 2 direkt an oder über der Prüfeinrichtung 25 zur Durchführung der Prüfung positionieren bzw. halten kann.

Nach dem optionalen Prüfen wird die abgeblockte Linse 2 wieder ausgegeben bzw. abgegeben, insbesondere an die Fördereinrichtung bzw. Weiterfördereinrichtung 20 bzw. einen Transportträger 17 oder 18.

Wenn die abgeblockte Linse 2 wieder in einen Transportträger 17 abgelegt wird, kann dies insbesondere durch Ablegen an der leeren Entnahmeposition E, wie in Fig. 4 angedeutet. Besonders bevorzugt erfolgt das Ablegen der abgeblockten Linse 2 wieder an die gleiche Position im selben Transportträger 17, von dem die Linse 2 ursprünglich entnommen wurde. Insbesondere ist der Transportträger 17 nämlich mit einer Information oder einem Informationsträger versehen, so dass identifizierbar ist oder feststellbar ist, um welche Linse oder welchen Auftrag es sich handelt, so dass alle für die Bearbeitung erforderlichen Informationen insbesondere abrufbar oder direkt lesbar sind.

Alternativ oder wahlweise kann auch eine Abgabe oder ein Ablegen der abgeblockten Linse 2 an den anderen Transportträger 18, beispielsweise an einer Position P erfolgen, wie in Fig. 4 angedeutet.

Besonders bevorzugt liegen die Positionen E und P in einer der Bewegungsrichtungen des Trägers 7D bzw. der Manipulationseinrichtung 7 bzw. in der X-Richtung hintereinander.

Besonders bevorzugt sind die beiden Fördereinrichtungen 19 und 20 nebeneinander angeordnet und/oder weisen parallele Förderrichtungen auf.

Die Vorrichtung 1 weist vorzugsweise eine Steuereinrichtung 26, insbesondere mit einem Bedienpanel oder Touch-Screen 26A zur Steuerung des bevorzugten Verfahrensablaufs bzw. der Vorrichtung 1 auf.

Die Vorrichtung 1 weist vorzugsweise eine Erfassungseinrichtung 27 - hier einen Barcodeleser - auf, um Informationen über die einzelnen Aufträge bzw. abzublockenden Linsen 2 bzw. verwendeten Blockstücke 3 aufnehmen zu können. Diese Informationen können beispielsweise direkt oder indirekt über den Transportträger 17 - hier vorzugsweise über einen Barcode insbesondere auf einem Begleitschein - , die abzublockende Linse 2 und/oder deren Blockstück 3 übermittelt und/oder von einer zentralen Steuerung oder Auftragsverwaltung zur Verfügung gestellt oder abgerufen werden. Dies ermöglicht, insbesondere ohne zusätzliche Überprüfung oder Messung der Blockstücke 3, diese nach Größe und/oder Form zu sortieren, da über diese Informationen oder daraus abgeleitete Informationen feststellbar ist, welche Art von Blockstück 3 jeweils eingesetzt wurde.

Alternativ oder zusätzlich kann die Vorrichtung 1 auch eine Einrichtung zur Überprüfung der Blockstücke 3 aufweisen, um festzustellen, ob die Blockstücke 3 in gewünschter Weise gereinigt worden sind, ob Beschädigungen vorliegen und/oder welche Form und/oder Größe die Blockstücke 3 aufweisen.

Die Vorrichtung 1 kann optional auch eine hier nicht dargestellte Einrichtung zur Reinigung und/oder Trocknung der Transportträger 17 und/oder 18 aufweisen.

Weiter kann die Vorrichtung 1 auch dazu ausgebildet sein, die Informationen bzw. Informationsträger, wie bei den Transportträgern 17, auch für die zusätzlichen Transportträger 18 bereitzustellen oder zu erzeugen, um die Informationen über die jeweils abgelegten Linsen 2 entsprechend bereitzustellen. Diese Informationen bzw. Informationsträger, wie ein Barcode beispielsweise auf einem Begleitschein, können von der Vorrichtung 1 bedarfsweise erzeugt, bedruckt, (elektrisch) beschrieben und/oder von dem bisherigen Transportträger 17 der Linse 2 übernommen werden, beispielsweise durch entsprechendes Übergeben des Informationsträgers von einem Linsenträger 17 zum zusätzlichen Linsenträger 18.

### Bezugszeichenliste:

- 1: Vorrichtung
- 2: Linse
- 2A: Blockseite
- 3: Blockstück
- 4: Blockmaterial
- 5: Schutzschicht/Schutzfolie
- 6: Arbeitsraum
- 6A: Gehäuse
- 6B: Tür
- 6C: Öffnung
- 6D: Boden
- 6E: Ablauf
- 6F 6G: Schwenklagerung Schwenkantrieb
- 6H: Einrichtung
- 7: Manipulationseinrichtung
- 7A: erster Greifer
- 7B: zweiter Greifer
- 7C: dritter Greifer
- 7D: Träger
- 7E: Linearführung (X)
- 7F: Linearführung (Y)
- 7G: Stelleinrichtung
- 8: erste Halteeinrichtung
- 8A: Halter
- 8B: Drehantrieb
- 8C: Lagerteil
- 9: zweite Halteeinrichtung
- 9A: Halter/Aufnahme
- 9B: Drehantrieb
- 9C: Lagerteil
- 10: erste Düseneinrichtung
- 11: zweite Düseneinrichtung
- 12: zusätzliche Düseneinrichtung
- 13: Auffangbehälter
- 14: Tank
- 15: Pumpe
- 16: Temperiereinrichtung
- 17: großer Transportträger
- 18: kleiner Transportträger
- 19: Zufördereinrichtung
- 20: Weiterfördereinrichtung
- 21: Wärmeeinrichtung
- 22: Gestell
- 23: Sortiereinrichtung
- 23A: Aufnahmeöffnung
- 23B: Rutsche/Rohr
- 24: Transportwagen
- 24A: Aufnahmebehälter
- 25: Prüfeinrichtung
- 26: Steuereinrichtung
- 26A: Touch-Screen
- 27: Erfassungseinrichtung

- A: Abgabeposition
- D: Drehachse
- E: Entnahmeposition
- F1: erster Fluidstrahl
- F2: zweiter Fluidstrahl
- F3: dritter Fluidstrahl
- P: Position
- R: Radialebene
- W: Wasser
- X: Richtung
- Y: Richtung
- Z: Richtung

## Patentansprüche

1. Vorrichtung (1) zum Abblocken einer Linse (2) von einem Blockstück (3), an dem die Linse (2) mittels eines Blockmaterials (4) geblockt ist, wobei eine Blockseite (2A) der Linse (2) optional mit einer Schutzschicht (5) versehen ist,
mit einem Arbeitsraum (6),
mit einer ersten Halteeinrichtung (3) zur Halterung der Linse (2) im Arbeitsraum (6),
mit einer zweiten Halteeinrichtung (9) zur Halterung des Blockstücks (3) im Arbeitsraum (6), wobei die erste Halteeinrichtung (8) einen Drehantrieb (8B) aufweist, und
mit mehreren Düseneinrichtungen (10, 11, 12) zur Abgabe von Fluidstrahlen (F1, F2, F3) im Arbeitsraum (6),
wobei die zweite Halteeinrichtung (9) einen Drehantrieb (9A) aufweist und
wobei die Vorrichtung (1) drei Düseneinrichtungen (10, 11, 12) zur Erzeugung eines ersten, eines zweiten und eines zusätzlichen Fluidstrahls (F1, F2, F3) im Arbeitsraum (6) aufweist, wobei der erste Fluidstrahl (F1) zum Lösen der Linse (2) mit der Schutzschicht (5), sofern vorhanden, vom Blockmaterial (4), der zweite Fluidstrahl (F2) zum Entfernen von Blockmaterial (4) von dem Blockstück (3) und der zusätzliche Fluidstrahl (F3) zum Entfernen der Schutzschicht (5) und/oder von Blockmaterial (4) von der Linse (2) einsetzbar ist.

2. Vorrichtung nach Anspruch 1, **dadurch gekennzeichnet, dass** zwei der drei Düseneinrichtungen (11, 12) zur Erzeugung von entgegengesetzt oder unterschiedlich zu einer Radialebene (R) einer Drehachse (D) der Linse (2) bzw. des Blockstücks (3) geneigten Fluidstrahlen (F2, F3) im Arbeitsraum (6) ausgebildet bzw. angeordnet sind und/oder - insbesondere längs einer Drehachse (D) der Linse (2) bzw. des Blockstücks (3) - oszillierend bewegbar sind.

3. Vorrichtung nach Anspruch 1 oder 2, **dadurch gekennzeichnet, dass** die zweite Düseneinrichtung (11) längs einer Drehachse (D) der Linse (2) verschiebbar oder verstellbar, insbesondere hin- und her bewegbar ist.

4. Vorrichtung nach einem der voranstehenden Ansprüche, **dadurch gekennzeichnet, dass** die zusätzliche Düseneinrichtung (12) längs einer Drehachse (D) der Linse (2) verschiebbar oder verstellbar, insbesondere hin- und her bewegbar ist.

5. Vorrichtung nach einem der voranstehenden Ansprüche, **dadurch gekennzeichnet, dass** die beiden Halteeinrichtungen (8, 9) axial voneinander abrückbar sind, insbesondere hierdurch die abgeblockte Linse (2) in den Bereich eines Fluidstrahls (F3) zur Entfernung der Schutzschicht (5) und/oder von Blockmaterial (4) von der Blockseite (2A) der Linse (2) bewegbar ist.

6. Vorrichtung nach einem der voranstehenden Ansprüche, **dadurch gekennzeichnet, dass** die Vorrichtung (1) eine Wärmeinrichtung (21) zur Erwärmung oder Vorwärmung des Blockmaterials (4) mittels Strahlung aufweist.

7. Vorrichtung nach einem der voranstehenden Ansprüche, **dadurch gekennzeichnet, dass** die erste Halteeinrichtung (8) einen Halter (8A) zum drehenden Halten der Linse (2) aufweist, wobei der Halter (8A) relativ von dem Blockstück (3) insbesondere linear abrückbar bzw. wegbewegbar ist.

8. Vorrichtung nach einem der voranstehenden Ansprüche, **dadurch gekennzeichnet, dass** die erste Düseneinrichtung (10) zur Abgabe des Fluidstrahls (F1) seitlich auf das Blockmaterial (4) ausgebildet ist, während sich die Linse (2) zusammen mit dem Blockstück (3) dreht.

9. Vorrichtung nach einem der voranstehenden Ansprüche, **dadurch gekennzeichnet, dass** die Vorrichtung (1) eine Weiterfördereinrichtung (20), insbesondere ein zusätzliches Förderband, zur Förderung von anderen - insbesondere kleineren - Transportträgern (18) zur Aufnahme der abgeblockten Linsen (2) aufweist.

10. Vorrichtung nach einem der voranstehenden Ansprüche, **dadurch gekennzeichnet, dass** die Vorrichtung (1) eine Prüfeinrichtung (25) zur insbesondere optischen Prüfung einer geblockten und/oder abgeblockten Linse (2) und/oder eine Sortiereinrichtung (23) für abgeblockte Blockstücke (3) aufweist.

11. Verfahren zum Abblocken einer Linse (2) von einem Blockstück (3), an dem die Linse (2) mittels eines Blockmaterials (4) geblockt ist, wobei eine Blockseite (2A) der Linse (2) mit einer optionalen Schutzschicht (5) versehen ist, wobei die Linse (2) mittels eines ersten Fluidstrahls (F1) von einem Blockstück (3) unter Drehen abgeblockt wird,
**dadurch gekennzeichnet,**
**dass** nach dem Abblocken das Blockmaterial (4) von dem abgeblockten Blockstück (3) und die Schutzschicht (5) oder das Blockmaterial (4) von der abgeblockten Linse (2) simultan mittels zwei weiteren, separaten Fluidstrahlen (F2, F3) entfernt werden, und
**dass** die abgeblockte Linse (2) und das abgeblockte Blockstück (3) gedreht werden, während die Fluidstrahlen (F2, F3) einwirken.

12. Verfahren nach Anspruch 11, **dadurch gekennzeichnet, dass** die abgeblockte Linse (2) von einer Abblockvorrichtung (1) oder deren Manipuliereinrichtung (7) in einen zusätzlichen Transportträger (18) abgelegt und in diesem insbesondere für eine weitere Bearbeitung unabhängig von einem ursprünglich die geblockte Linse (2) verwendeten Transsportträger (17) weitergefördert wird.

13. Verfahren nach Anspruch 11 oder 12, **dadurch gekennzeichnet, dass** die Linse (2) und das Blockstück (3) beim Abblocken jeweils separat gehalten und gleichzeitig gedreht und auseinander gezogen werden.

14. Verfahren nach einem der Ansprüche 11 bis 13, **dadurch gekennzeichnet, dass** die abzublockende Linse (2) mit Blockstück (3), die abgeblockte Linse (2) und das Blockstück (3) von separaten Greifern (7A-7C), insbesondere pneumatisch bzw. durch Unterdruck, gegriffen werden und vor Ablegen der abgeblockten Linse (2) und des abgeblockten Blockstücks (3) zunächst ein Arbeitsraum (6) bzw. eine Halteeinrichtung (9) mit der nächsten abzublockenden Linse (2) beschickt wird.

## Claims

1. Apparatus (1) for deblocking a lens (2) from a block piece (3), on which the lens (2) is blocked by means of a block material (4), wherein a block side (2A) of the lens (2) is optionally provided with a protective layer (5),
with a working space (6),
with a first holding device (8) for holding of the lens (2) in the working space (6),
with a second holding device (9) for holding of the block piece (3) in the working space (6), wherein the first holding device (8) has a rotary drive (8B), and
with multiple nozzle devices (10, 11, 12) for dispensing fluid jets (F1, F2, F3) in the working space (6),
wherein the second holding device (9) has a rotary drive (9A) and
wherein the apparatus (1) has three nozzle devices (10, 11, 12) for generating a first, a second, and an additional fluid jet (F1, F2, F3) in the working space (6), wherein the first fluid jet (F1) can be used to detach the lens (2) with the protective layer (5), if present, from the block material (4), the second fluid jet (F2) can be used to remove block material (4) from the block piece (3), and the additional fluid jet (F3) can be used to remove the protective layer (5) and/or block material (4) from the lens (2).

2. Apparatus according to claim 1, **characterized in that** two of the three nozzle devices (11, 12) are designed and/or arranged for generating fluid jets (F2, F3) that are inclined opposite to or differently from a radial plane (R) of an axis of rotation (D) of the lens (2) and/or the block piece (3) in the working space (6) and/or are movable in an oscillating manner - in particular along an axis of rotation (D) of the lens (2) and/or the block piece (3).

3. Apparatus according to claim 1 or 2, **characterized in that** the second nozzle device (11) is shiftable or adjustable, in particular movable back and forth, along an axis of rotation (D) of the lens (2).

4. Apparatus according to one of the preceding claims, **characterized in that** the additional nozzle device (12) is shiftable or adjustable, in particular movable back and forth, along an axis of rotation (D) of the lens (2).

5. Apparatus according to one of the preceding claims, **characterized in that** the two holding devices (8, 9) are movable away from one another axially, in particular thereby the deblocked lens (2) is movable into the area of a fluid jet (F3) for removing the protective layer (5) and/or of block material (4) from the block side (2A) of the lens (2).

6. Apparatus (1) according to one of the preceding claims, **characterized in that** the apparatus (1) has a heating device (21) for heating or preheating the block material (4) by means of radiation.

7. Apparatus according to one of the preceding claims, **characterized in that** the first holding device (8) has a holder (8A) for rotating holding of the lens (2), wherein the holder (8A) can be displaced and/or moved away relatively from the block piece (3) in particular in a linear manner.

8. Apparatus according to one of the preceding claims, **characterized in that** the first nozzle device (10) is designed for dispensing the fluid jet (F1) laterally to the block material (4), while the lens (2) rotates together with the block piece (3).

9. Apparatus according to one of the preceding claims, **characterized in that** the apparatus (1) has an onward-conveying device (20), in particular an additional conveyor belt, for conveying by other - in particular smaller - transport carriers (18) for receiving of the deblocked lenses (2).

10. Apparatus according to one of the preceding claims, **characterized in that** the apparatus (1) has a testing device (25) for in particular optical testing of a blocked and/or deblocked lens (2) and/or has a sorting device (23) for deblocked block pieces (3).

11. Method for deblocking a lens (2) from a block piece (3), on which the lens (2) is blocked by means of a block material (4), wherein a block side (2A) of the lens (2) is provided with an optional protective layer (5), wherein the lens (2) is deblocked by means of a first fluid jet (F1) from a block piece (3) while rotating,
**characterized**
**in that** after the deblocking, the block material (4) is removed from the deblocked block piece (3) and the protective layer (5) or the block material (4) is removed from the deblocked lens (2) simultaneously by means of two further, separate fluid jets (F2, F3), and
**in that** the deblocked lens (2) and the deblocked block piece (3) are rotated, while the fluid jets (F2, F3) act.

12. Method according to claim 11, **characterized in that** the deblocked lens (2) is placed by a deblocking apparatus (1) or its handling device (7) into an additional transport carrier (18), and is conveyed onward in the latter, in particular for a further processing, independently of a transport carrier (17) originally used for the blocked lens (2).

13. Method according to claim 11 or 12, **characterized in that** during deblocking, the lens (2) and the block piece (3) are each held separately and are simultaneously rotated and pulled apart.

14. Method according to one of claims 11 to 13, **characterized in that** the lens (2) that is to be deblocked with block piece (3), the deblocked lens (2), and the block piece (3) are gripped by separate grippers (7A-7C), in particular pneumatically and/or by underpressure, and before the deblocked lens (2) and the deblocked block piece (3) are placed down, first a working space (6) and/or a holding device (9) is fed with the next lens (2) that is to be deblocked.

## Revendications

1. Appareil (1) pour débloquer une lentille (2) à partir d'une pièce de blocage (3) sur laquelle la lentille (2) est bloquée au moyen d'un matériau de blocage (4), un côté de blocage (2A) de la lentille (2) étant optionnellement pourvu d'une couche de protection (5),
avec un espace de travail (6),
avec un premier dispositif de maintien (8) pour maintenir la lentille (2) dans l'espace de travail (6),
avec un deuxième dispositif de maintien (9) pour maintenir la pièce de blocage (3) dans l'espace de travail (6), le premier dispositif de maintien (8) présentant un entraînement en rotation (8B), et
avec plusieurs dispositifs de buses (10, 11, 12) pour l'émission de jets de fluide (F1, F2, F3) dans l'espace de travail (6),
le deuxième dispositif de maintien (9) présentant un entraînement en rotation (9A), et
l'appareil (1) présentant trois dispositifs de buses (10, 11, 12) pour produire un premier, un deuxième et un jet de fluide supplémentaire (F1, F2, F3) dans l'espace de travail (6), le premier jet de fluide (F1) pouvant être utilisé pour détacher la lentille (2) avec la couche de protection (5), si elle est présente, du matériau de blocage (4), le deuxième jet de fluide (F2) pouvant être utilisé pour enlever le matériau de blocage (4) de la pièce de blocage (3) et le jet de fluide supplémentaire (F3) pouvant être utilisé pour enlever la couche de protection (5) et/ou le matériau de blocage (4) de la lentille (2).

2. Appareil selon la revendication 1, **caractérisé en ce que** deux des trois dispositifs de buses (11, 12) sont conçus et/ou disposés dans l'espace de travail (6) pour produire des jets de fluide (F2, F3) inclinés de manière opposée ou différente par rapport à un plan radial (R) d'un axe de rotation (D) de la lentille (2) et/ou de la pièce de blocage (3) et/ou sont mobiles de manière oscillante - en particulier le long d'un axe de rotation (D) de la lentille (2) et/ou de la pièce de blocage (3).

3. Appareil selon la revendication 1 ou 2, **caractérisé en ce que** le deuxième dispositif de buse (11) peut être déplacé ou réglé le long d'un axe de rotation (D) de la lentille (2), en particulier être déplacé en va-et-vient.

4. Appareil selon l'une des revendications précédentes, **caractérisé en ce que** le dispositif de buse supplémentaire (12) peut être déplacé ou réglé le long d'un axe de rotation (D) de la lentille (2), en particulier être déplacé en va-et-vient.

5. Appareil selon l'une des revendications précédentes, **caractérisé en ce que** les deux dispositifs de maintien (8, 9) peuvent être écartés axialement l'un de l'autre, en particulier la lentille (2) débloquée étant ainsi déplaçable dans la zone d'un jet de fluide (F3) pour l'enlèvement de la couche de protection (5) et/ou de matériau de blocage (4) du côté de blocage (2A) de la lentille (2).

6. Appareil selon l'une des revendications précédentes, **caractérisé en ce que** l'appareil (1) présente un dispositif de chauffage (21) pour le chauffage ou le préchauffage du matériau de blocage (4) au moyen d'un rayonnement.

7. Appareil selon l'une des revendications précédentes, **caractérisé en ce que** le premier dispositif de maintien (8) comporte un support (8A) pour le maintien en rotation de la lentille (2), le support (8A) pouvant être écarté et/ou déplacé par rapport à la pièce de blocage (3), en particulier de manière linéaire.

8. Appareil selon l'une des revendications précédentes, **caractérisé en ce que** le premier dispositif de buse (10) est conçu pour émettre le jet de fluide (F1) latéralement sur le matériau de blocage (4) tandis que la lentille (2) tourne conjointement avec la pièce de blocage (3).

9. Appareil selon l'une des revendications précédentes, **caractérisé en ce que** l'appareil (1) présente un dispositif de transport ultérieur (20), en particulier une bande transporteuse supplémentaire, pour le transport d'autres supports de transport (18) - en particulier plus petits - pour la réception des lentilles débloquées (2).

10. Appareil selon l'une des revendications précédentes, **caractérisé en ce que** l'appareil (1) présente un dispositif de contrôle (25) pour le contrôle en particulier optique d'une lentille (2) bloquée et/ou débloquée et/ou un dispositif de tri (23) pour les pièces de blocage (3) débloquées.

11. Procédé pour débloquer une lentille (2) à partir d'une pièce de blocage (3) sur laquelle la lentille (2) est bloquée au moyen d'un matériau de blocage (4), un côté de blocage (2A) de la lentille (2) étant pourvu d'une couche de protection optionnelle (5), dans lequel la lentille (2) est débloquée au moyen d'un premier jet de fluide (F1) à partir d'une pièce de blocage (3) en tournant,
**caractérisé**
**en ce que**, après le déblocage, le matériau de blocage (4) est enlevé de la pièce de blocage débloquée (3) et la couche de protection (5) ou le matériau de blocage (4) est enlevé de la lentille débloquée (2), simultanément au moyen de deux autres jets de fluide séparés (F2, F3), et
**en ce que** la lentille débloquée (2) et la pièce de blocage débloquée (3) sont tournées pendant que les jets de fluide (F2, F3) agissent.

12. Procédé selon la revendication 11, **caractérisé en ce que** la lentille débloquée (2) est déposée par un appareil de déblocage (1) ou son dispositif de manipulation (7) dans un support de transport supplémentaire (18) et est transportée plus loin dans celui-ci, en particulier pour un traitement ultérieur, indépendamment d'un support de transport (17) utilisé à l'origine pour la lentille bloquée (2).

13. Procédé selon la revendication 11 ou 12, **caractérisé en ce que** la lentille (2) et la pièce de blocage (3) sont maintenus chacun séparément lors du déblocage et sont tournées et écartées simultanément.

14. Procédé selon l'une des revendications 11 à 13, **caractérisé en ce que** la lentille (2) à débloquer avec la pièce de blocage (3), la lentille (2) débloquée et la pièce de blocage (3) sont saisis par des préhenseurs séparés (7A-7C), en particulier pneumatiquement ou par dépression, et avant de déposer la lentille (2) débloquée et la pièce de blocage (3) débloquée, on alimente d'abord un espace de travail (6) ou un dispositif de maintien (9) avec la lentille (2) suivante à débloquer.
